# EUROPÄISCHE PATENTSCHRIFT

(11) **EP 3 619 082 B1**
(45) Veröffentlichungstag und Bekanntmachung des Hinweises auf die Patenterteilung: **16.12.2020**
(21) Anmeldenummer: 18707228.5
(22) Anmeldetag: 16.02.2018
(51) Int. Cl.: B60T 17/22, G01M 17/08

(54) **VERFAHREN ZUR DURCHFÜHRUNG EINER AUTOMATISCHEN BREMSPROBE AN EINEM ZUG UND DAZU AUSGEBILDETER WAGEN**
METHOD FOR CARRYING OUT AN AUTOMATIC BRAKE TEST ON A TRAIN, AND CARRIAGE DESIGNED FOR THIS PURPOSE
PROCÉDÉ DE MISE EN UVRE D'UNE VÉRIFICATION AUTOMATIQUE DE FREINS SUR UN TRAIN ET WAGON CONÇU À CET EFFET

(30) Priorität: 05.05.2017 AT 503712017
(43) Veröffentlichungstag der Anmeldung: 11.03.2020
(73) Patentinhaber: PJ Messtechnik GmbH, 8020 Graz (AT)
(72) Erfinder: ADELMANN, Christoph, 8200 Gleisdorf (AT); JOCH, Martin, 8045 Graz (AT); LORENZUTTI, Christoph, 8010 Graz (AT); MOSER, Ralph, 8010 Graz (AT); PETSCHNIG, Günter, 8042 Graz (AT); WALTENSDORFER, Herwig, 8010 Graz (AT)
(74) Vertreter: Margotti, Herwig Franz
(86) Internationale Anmeldenummer: PCT/AT2018/060044
(87) Internationale Veröffentlichungsnummer: WO 2018/201171

(56) Entgegenhaltungen:
- WO-A1-2013/034720
- DE-A1-102009 020 428
- DE-A1-102015 004 590

## Beschreibung

Die Erfindung betrifft ein Verfahren zur Durchführung einer automatischen Bremsprobe an einem Zug gemäß dem Oberbegriff des Anspruchs 1. In einem weiteren Aspekt betrifft die Erfindung einen zur Durchführung des genannten Verfahrens ausgebildeten Wagen für den Schienenverkehr.

Nach der Zugbildung - darunter versteht man die mechanische und pneumatische Kuppelung der Wagen eines Zugs und korrektes Stellen der Umstellvorrichtungen der Bremsen an den Wagen - ist es u.a. betrieblich vorgeschrieben, die Funktion der Bremsen aller Wagen im Zugverband zu überprüfen. Dafür kann direkt eine Lokomotive oder aber auch eine andere Vorrichtung, die über die erforderliche Ausrüstung - wie Druckluftversorgung und Führerbremsventil - verfügt, verwendet werden. Derzeit sind für den Bremsprobentest zwei Personen erforderlich, der Bremsprobeverantwortliche, der das Bremsprüfgerät bzw. die Lok bedient, und der Wagenmeister, der alle Wagen des Zuges abgeht und die Wagenreihenfolge, die Stellungen der Umstellvorrichtungen und den Zustand der Bremse an allen Wagen überprüft. Dabei wird kontrolliert, ob die Feststellbremse (auch Handbremse genannt) gelöst ist, ob bei gelöster Bremse alle Bremsklötze/Bremsbeläge nicht mehr anliegen bzw. nicht festgefroren sind und ob bei angelegter Bremse der Bremsklotz/Bremsbelag fest anliegt. Zudem wird kontrolliert, ob alle Bremsen eingeschaltet sind, ob die Umstelleinrichtung G/P (Güterzug/Personenzug) richtig gestellt ist und ob die Lastumstellvorrichtung dem aktuellen Beladezustand des Wagens entspricht.

Für den gesamten Vorgang der vollständigen Bremsprobe muss der Wagenmeister den gesamten Zug mehrmals abgehen, dies dauert üblicherweiser zumindest 30 Minuten, bei langen Güterzügen aber auch wesentlich länger.

Es wird bereits seit Jahren über eine kostengünstige Automatisierungslösung der vorgeschriebenen Bremsproben nachgedacht, um die lange Zugvorbereitungszeit zu verkürzen, da dies zu einer deutlichen Kostenreduzierung und Beschleunigung des Schienenverkehrs führen könnte. Eine der Schwierigkeiten bei der Lösung dieses Problems besteht darin, dass Güterwagen im Gegensatz zu Reisezugwagen nicht elektrisch miteinander verbunden sind und auch an Bord des Güterwagens keine Stromversorgung existiert. Die Steuerung der Bremsen der Wagen erfolgt pneumatisch über eine durch den gesamten Zugverband hindurchführende Hauptluftleitung (HL), die mit Bremssteuerventilen an den Wagen gekuppelt ist und die Bremssteuerventile durch Variierung des Drucks in der HL ansteuert.

In der Schrift DE 10 2015 004 590 A1 wird ein System zur automatischen Bremsprüfung eines Güterzugverbands beschrieben, welches dazu dient, die geschilderten Probleme bei einer kostengünstigen Automatisierungslösung von Bremsproben zu lösen. Allerdings erfolgt die sicherheitstechnische und funktionale Umsetzung des beschriebenen Verfahrens nicht im erforderlichen Maße, um damit betrieblich einen Wagenmeister ersetzen zu können. So kann mit diesem Aufbau z.B. kein verbogenes/klemmendes Bremsgestänge bzw. fehlende Bremsklötze erkannt werden. Es kann mit diesem System auch nicht gewährleistet werden, dass bei anliegendem Bremszylinderdruck (C-Druck) auch wirklich eine Bremskraft am Bremsbelag aufgebracht wird und der Wagen tatsächlich eine wirksame Bremse hat. Die zwingende Anwendung des Internet für die Kommunikation im gesamten Verfahren schließt eine Anwendung in Gebieten ohne ausreichende Internetverbindungsqualität aus. Dem geschuldeten Sicherheitsaspekt der Bremsprobe wird auch insofern nicht Rechnung getragen, als die Kommunikation offensichtlich unverschlüsselt über ein öffentliches Netz (Internet) abgewickelt wird. Weiters ist in dem Dokument beschrieben, dass im seltenen Falle, dass zwei nebeneinander stehende Züge gleichzeitig die Bremsprobe durchführen wollen, ein Lokführer mit der Durchführung der Bremsprobe warten muss, bis der andere Lokführer die Bremsprobe beendet hat. Dieser als selten beschriebene Fall würde bei Etablierung eines derartigen Systems im Bahnverkehr in einem Rangierbahnhof jedoch eher die Regel als die Ausnahme sein. All diese geschilderten Aspekte legen dar, dass bei diesem bekannten System wesentliche betriebliche/sicherheitstechnische Nachteile zu erwarten sind. Insbesondere wird ein Wagenmeister nach wie vor als erforderlich beschrieben.

In der Schrift WO 2013/034720 A1 wird eine Bremssteuereinrichtung für eine Bremsanlage eines Schienenfahrzeugs offenbart, wobei die tatsächlich ausgeübte Bremskraft über einen Sensor erfasst wird.

Die Schrift EP 2 662 258 A2 wiederum beschreibt ein Verfahren, welches der Zustandsüberwachung der Hauptluftleitung (HL) eines Zugverbands dient. Wesentlich ist hierbei der HL-Druck und ein zugehöriger synchroner Zeitstempel, diese Informationen werden als Basis für die Auswertung verwendet. Dieses System ist nicht in der Lage, eine betrieblich korrekte Bremsprobe mit einem Wagenmeisters zu ersetzen, da weder der C-Druck noch eine mechanische Kraft, noch der Zustand der Feststellbremse oder der Umschaltvorrichtungen erfasst werden.

In den Schriften EP 2 805 859 A1 und DE 198 33 279 A1 werden Systeme beschrieben, welche die Bremsprobe zwar unterstützen, aber nicht im vollen Umfang einen Wagenmeister ersetzen. So wird hier in einem Zugverband nur der letzte Wagen messtechnisch erfasst, in eine betrieblich gültige Bremsprobe sind aber alle Wagen zuverlässig einzubinden. Da keine Kraftmessung in der Mechanik des Bremssystems erfolgt, können auch mit diesem Verfahren nicht alle möglichen Fehler im Bremssystem sicher erkannt werden.

Der vorliegenden Erfindung liegt daher die Aufgabe zugrunde, unter Vermeidung der Nachteile des geschilderten Standes der Technik die vorgeschriebenen Bremsproben bei der Zugbildung wesentlich schneller durchführen zu können als bisher und dabei gleichzeitig eine hohe Sicherheit der Bremsprobe gewährleisten zu können. Die Erfindung soll den Bremsprobeverantwortlichen durch die Automatisierung der Bremsprobe bei der Zugvorbereitung unterstützen und den Wagenmeister ersetzen können, indem die vollständige betriebliche Bremsprobe von einer einzigen Person oder im autonomen Betrieb sogar vollautomatisch durchgeführt werden kann. Ein Abgehen des Zuges bzw. einzelner Wagen soll nur mehr im Fehlerfalle erforderlich sein.

Die Erfindung löst die gestellte Aufgabe durch Bereitstellen eines Verfahrens zur Durchführung einer automatischen Bremsprobe an einem Zug, der eine Anzahl an mit pneumatisch-mechanischen Bremsen ausgerüsteten Wagen umfasst, wobei die pneumatisch-mechanischen Bremsen ein von einer Hauptluftleitung gesteuertes Bremssteuerventil und einen pneumatisch betriebenen Bremszylinder, dessen Bremszylinderdruck vom Bremssteuerventil gesteuert wird, aufweisen. Der Bremszylinder überträgt den Bremszylinderdruck über mechanische Komponenten der Bremse, wie z.B. ein Bremsgestänge und einen Bremsgestängesteller, auf einen Bremsbelag, insbesondere einen Bremsklotz oder Bremsbacken und erzeugt dadurch die Bremskraft der Bremse. Jeder Wagen ist mit einer Auswerteeinheit ausgerüstet und an jedem Wagen werden der Bremszylinderdruck und die durch den Bremszylinderdruck bewirkte Bremskraft messtechnisch erfasst, von der Auswerteeinheit ausgewertet und an ein Zentralgerät übertragen.

Dieses Verfahren erlaubt es, die derzeit von zumindest zwei Personen (z.B. Bremsprobenverantwortlicher und Wagenmeister) durchgeführte Zugvorbereitung und vollständige Bremsprobe automatisch unterstützt durch eine Person bzw. im vollautonomen Betrieb ohne Personal durchzuführen.

Die eigentliche Bremsprobe erfolgt im Sinne einer Kontrolle, ob bei indirekter Bremse mit der Hauptluftleitung (HL) ein Bremszylinderdruck (C-Druck) aufgebaut wird und eine entsprechende Bremskraft in der Mechanik (Bremsgestänge, Bremszange, ...) entsteht. Nach Lösen der Bremse muss der Bremsdruck wieder sinken und auch die Kraft in der Mechanik muss sich entsprechend verringern. Der Druck-Kraft-Zusammenhang jedes Wagens ist bekannt und wird innerhalb eines Toleranzbandes bzw. mittels Schwellenwerten kontrolliert. Mit dieser Systematik der kombinierten Druck und Kraftmessung ist die Bremsfunktion der Wagen nachweisbar, da potentielle Fehlerquellen, wie z.B. eine angezogene Feststellbremse, verbogenes Bremsgestänge, verlorener Bremsklotz, usw. sicher erkannt werden können und damit die Zuverlässigkeit der Bremse abgesichert ist.

Das Ergebnis der automatischen Zugbildung/Bremsprobe wird automatisch abgespeichert, es bedarf keiner Protokollierung auf Papier wie bislang.

In der Schrift EP 2 323 886 B1 wird ein System beschrieben, welches über eine Grundausstattung hinsichtlich Energieerzeugung, Funksender mit Antenne und eine Positionserfassungseinrichtung verfügt. Dieses System verfügt aber weder über eine Sensorik zur Messung des C-Drucks und der Bremsgestängekraft, noch über eine entsprechend intelligente Auswerte- und Verarbeitungseinheit.

In einer bevorzugten Ausführungsform der Erfindung kommunizieren die Auswerteeinheiten und das Zentralgerät über ein lokales Funknetz miteinander, wobei die Kommunikation zwischen dem Zentralgerät und den Auswerteeinheiten auf die Auswerteeinheiten jener Wagen beschränkt wird, die in einer den Zug definierenden Wagenliste enthalten sind. Dadurch können Züge unabhängig voneinander und gleichzeitig vorbereitet werden, auch wenn sich die lokalen Funknetze in ihrer Reichweite überschreiten.

Um zu verhindern, dass sich unauthorisierte Personen/Geräte in das Bremsprobenverfahren einschalten, ist erfindungsgemäß vorgesehen, die Kommunikation zwischen den Auswerteeinheiten und dem Zentralgerät verschlüsselt durchzuführen. Dabei wird aufgrund der hohen erzielbaren Kommunikationssicherheit bevorzugt ein Challenge-Response-Verfahren zur Authentifizierung der Auswerteeinheiten der Wagen und des Zentralgeräts selbst angewendet.

Dazu wird vorweg die Zugnummer an einen Datenserver eines Eisenbahn-Verkehrs-Unternehmens (EVU) geschickt und dieser antwortet mit einer entsprechenden Wagenliste, welche die Grundlage für den Aufbau der Kommunikation und der Authentifizierung der Wagen mit dem Schlüsselserver bildet. Wenn die Challenge-Response-Authentifizierung erfolgt ist, wird die gesamte Kommunikation zwischen dem Zentralgerät und den Wagen laut Wagenliste verschlüsselt über das lokale Funknetz abgewickelt. Die Wagen bzw. deren Auswerteeinheiten melden hierzu ihre Bereitschaft, sowie Identifikation und Position verschlüsselt zurück und das System überprüft die Wagenreihung aufgrund der gleisgenauen Positionsdaten. Weitere Wagen in Funkreichweite melden sich nicht zurück, da sie planmäßig nicht im Zugverband sind und nicht an der Zugvorbereitung/Bremsprobe teilnehmen.

Besonders vorteilhaft ist es, wenn zusätzlich zu C-Druck und Bremskraft an jedem Wagen auch die Schaltpositionen der Umstellvorrichtungen (Ein/Aus, G/P, leer/beladen) festgestellt und an das Zentralgerät übermittelt werden. Alternativ zu den Schaltpositionen kann auch der HL-Druck gemessen und ausgewertet werden. Aus der Kombination von C-Druck und HL-Druck können die Schaltstellungen aller Umstellvorrichtungen (Ein/Aus, G/P, leer/beladen) ermittelt werden. Zudem besteht die Möglichkeit bei Messung des HL-Druckes die Dichtheitsprobe auch zu erfassen und automatisch zu dokumentieren.
Es können damit alle Aspekte einer betrieblich korrekten, zuverlässigen und sicheren Zugvorbereitung / Bremsprobe abgedeckt werden, der Wagenmeister ist im Normalbetrieb für diese Tätigkeit nicht mehr erforderlich.

Wenn die Auswerteeinheiten mit GPS-Einheiten versehen sind, so ist eine gleisgenaue Ortung des Wagens und Erkennung der Wagenreihenfolge anhand der erfassten GPS-Position möglich.

Nachfolgend werden Ausführungsbeispiele der Erfindung anhand der Zeichnungen erläutert. Die Erfindung ist jedoch nicht auf diese Ausführungsbeispiele beschränkt. In den Zeichnungen zeigen:
Figur 1 das Prinzipbild einer pneumatisch-mechanischen Schienenfahrzeugbremse und der erfindungsmäßigen Sensorik;
Figur 2 ein Prinzipbild des erfindungsgemäßen lokalen Funknetzes mit dem Zentralgerät und der Wagen laut einer Wagenliste; und
Figur 3 ein Diagramm des sequenziellen Ablaufs einer erfindungsgemäß vorgeschlagenen Challenge-Response-Authentifizierung zur Kommunikation des Zentralgeräts mit den Wagen.

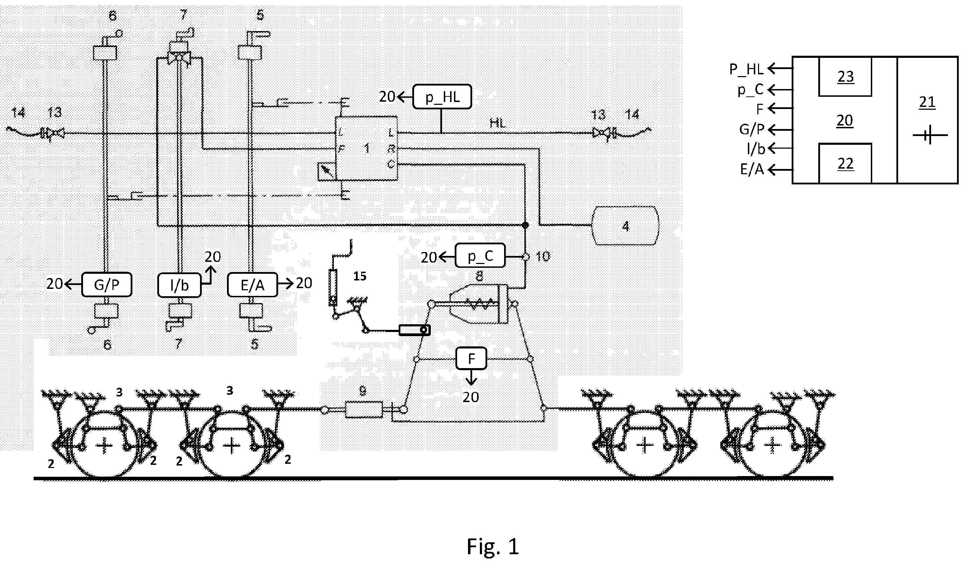

Figur 1 stellt schematisch den Aufbau einer pneumatisch-mechanischen Bremse eines Schienenfahrzeugs und die erfindungsgemäße Sensorik zur Überwachung dieser Bremse dar. Die pneumatisch-mechanische Bremse beruht auf dem Prinzip der indirekten Druckluftbremse, bei dem durch Veränderung des Druckes in einer Hauptluftleitung (HL), welche zugleich die Versorgungs- und die Steuerleitung aus einer Lokomotive eines das Schienenfahrzeug enthaltenden Zugverbands ist, ein mit der Hauptluftleitung HL verbundenes Bremssteuerventil 1 so gesteuert wird, dass das Bremssteuerventil 1 einen Bremszylinderdruck (C-Druck) 10 in Abhängigkeit des Drucks in der Hauptluftleitung HL steuert, wobei der Bremszylinderdruck 10 in einem Bremszylinder 8 in eine mechanische Kraft umgewandelt wird, die über mechanische Komponenten der Bremse, wie z.B. das Bremsgestänge 3 und den Bremsgestängesteller 9 auf einen Bremsklotz 2 oder einen anderen Bremsbelag (z.B. Bremsbacken bei Bremsscheiben) übertragen wird und dadurch die Bremskraft der Bremse erzeugt. Damit kann die Bremse an jedem Wagen im Zugverband - gekuppelt über Bremskupplungen 14 und bei offenem Luftabsperrhahn 13 - über die Hauptluftleitung HL angelegt bzw. gelöst werden. Die Benennung "indirekte" Bremse kommt aus der verwendeten inversen Logik, indem bei Sinken des HL-Druckes in der Hauptluftleitung HL das Bremssteuerventil 1 den Bremszylinderdruck 10 anhebt. Dies dient der Sicherheit, da durch Verwendung der inversen Logik bei einem unerwünschten Druckabfall in der Hauptluftleitung HL, z.B. wegen eines Risses in der Leitung oder einer defekten Bremskupplung 14, der Zug abgebremst wird. Das Bremssteuerventil 1 bezieht die Druckluft zur Erzeugung des C-Drucks 10 aus einem Vorratsluftbehälter (R-Behälter) 4, der über die Hauptluftleitung HL mit Druckluft versorgt wird.

Weiters sind bei der in Fig. 1 dargestellten pneumatisch-mechanischen Bremse mehrere Umstellvorrichtungen vorgesehen, nämlich ein Ein-Aus-Umsteller 5, ein Güterzug/Personenzug-Umsteller 6 und ein Umsteller für leer/beladen 7. In Abhängigkeit der Stellungen der genannten Umstellvorrichtungen 5, 6, 7 wird die Bremse eines Wagen ganz außer Betrieb gesetzt, die Anlegezeit der Bremse verändert bzw. der Bremszylinderdruck 10 an den Beladezustand des Wagens angepasst. Alternativ zur Umstellvorrichtung leer/beladen 7 kann auch ein Lastwiegeventil am Wagen eingebaut sein, das in Abhängigkeit von der ermittelten Last als Stellvorrichtung für den Bremszylinderdruck 10 zwischen leer und beladen (bzw. Zwischenwerten) wirkt. Zudem gibt es die Möglichkeit, über eine Vorrichtung (z.B. mittels Handrad, Kurbel) die Feststellbremse 15 anzulegen und damit eine Kraft im Bremsgestänge 3 zu erzeugen, um den Wagen ohne Druckluft für längere Zeit gebremst abstellen zu können.

Eine Kraft im Bremsgestänge 3 kann also sowohl infolge der durch den Bremszylinderdruck 10 im Bremszylinder 8 erzeugten Kraft als auch infolge der von der Feststellbremse 15 ausgeübten Kraft entstehen. Erst durch die kombinierte Messung von C-Druck 10 und Gestängekraft F kann die betrieblich vorgeschriebene Bremsprobe in einer Art und Weise automatisiert durchgeführt werden, dass mögliche Fehler - wie z.B. verbogenes Bremsgestänge, angezogenen Feststellbremse oder auch verlorener Bremsklotz - sicher erkannt werden können. Aus diesem Grund sieht die vorliegende Erfindung die Ausbildung eines Sensors p_C zur Erfassung des Bremszylinderdrucks 10 und eines Sensors F zur Erfassung einer durch den Bremszylinderdrucks 10 in der Bremsmechanik bewirkten Kraft, die in einer Bremskraft resultiert, vor. Um die manuelle Tätigkeit eines Wagenmeisters vollständig ersetzen zu können, sind bevorzugt zusätzlich ein Sensor E/A für die Erfassung der Stellung des Ein-Aus-Umstellers 5, ein Sensor G/P für die Erfassung der Stellung des Güterzug/Personenzug-Umstellers 6 und ein Sensor l/b zur Erfassung der Stellung des Umstellers für leer/beladen 7. Die genannten zusätzlichen Sensoren können als Positions- oder Endlagenschalter an jeder Umstellvorrichtung 5, 6, 7 ausgebildet sein. Wenn ein Sensor p_HL zur Erfassung des Drucks in der Hauptluftleitung HL vorgesehen wird, kann die Stellung der Umsteller 5, 6, 7 vorteilhaft durch Messung und Auswertung des HL-Druckes in Kombination mit dem erfassten C-Druck 10 ermittelt werden.

Die Messsignale aller im Wagen verbauten Sensoren, d.h. zumindest des Sensors p_C zur Erfassung des Bremszylinderdrucks 10 und des Sensors F zur Erfassung einer durch den Bremszylinderdrucks 10 in der Bremsmechanik bewirkten Kraft, sowie der optionalen Sensoren E/A, G/P, l/b und/oder des Sensors p_HL zur Erfassung des Drucks in der Hauptluftleitung HL werden einer on-board Auswerteeinheit 20 zugeführt, die eine Stromversorgung bzw. Stromerzeugung 21 zur eigenen Energieversorgung und, soweit erforderlich, der Energieversorgung der angeschlossenen Sensoren umfasst. Weiters weist die Auswerteeinheit Rechen- und Speichermittel zur Durchführung der notwendigen Berechnungen zur Auswertung und Speicherung der empfangenen Messsignale auf, sowie eine Kommunikationseinrichtung 22 zur sicheren drahtlosen Kommunikation mit einem tragbaren Zentralgerät ZG1 auf. Weiters ist die Auswerteeinheit 20 mit einer GPS-Einheit 23 versehen, die eine gleisgenaue Ortung des Wagens und Erkennung der Wagenreihenfolge anhand der GPS-Position bietet.

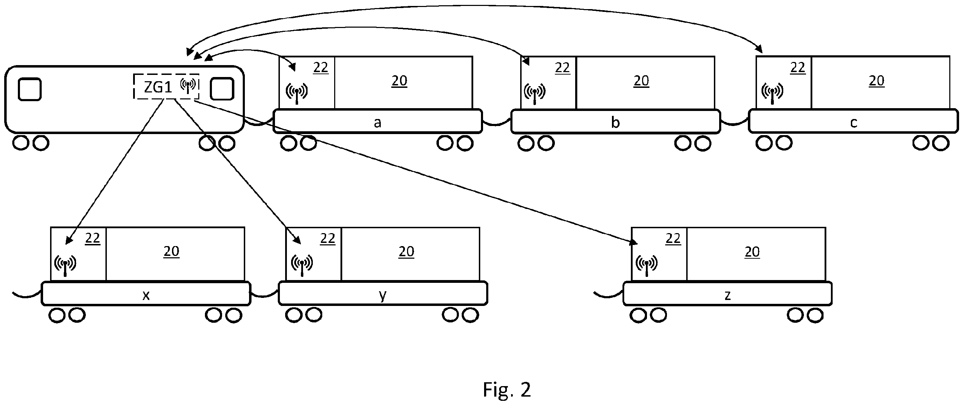

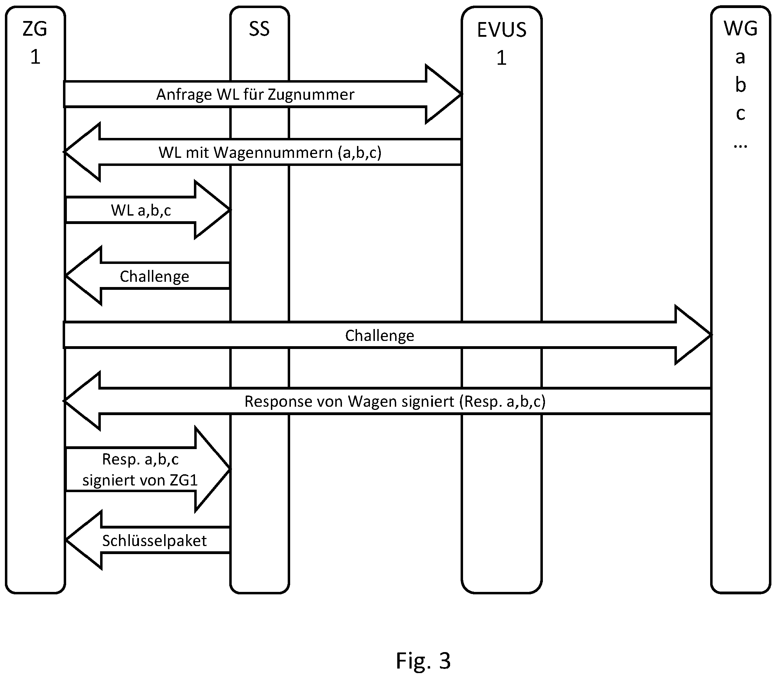

Fig. 2 stellt schematisch die Kommunikation zwischen den Auswerteeinheiten 20 und einem Zentralgerät ZG1 mittels eines lokalen Funknetzes - hergestellt mittels Kommunikationseinrichtungen 22 - zwischen dem Zentralgerät ZG1 und allen mit Auswerteeinheiten 20 ausgerüsteten Wagen in Funkreichweite, speziell jedoch der laut einer Wagenliste mit einer Lokomotive zu einem Zugverband verbundenen Wagen a,b,c laut Wagenliste. Die Zugbildung erfolgt stets anhand von Zugnummern und zugehörigen Wagenlisten mit entsprechender Reihung der Wagen. Nach dem Aufbau einer sicheren verschlüsselten Verbindung zwischen dem Zentralgerät ZG1 und den Auswerteeinheiten 20 der Wagen a, b, c, die nachfolgend anhand des Diagramms von Fig. 3 näher erläutert wird, erfolgt die gesamte Kommunikation zwischen dem Zentralgerät ZG1 und den Wagen a, b, c über das lokale Funknetz. Mit Auswerteeinheiten 20 der Wagen x, y, z, die nicht in der Wagenliste enthalten sind, kann das Zentralgerät ZG1 keine Verbindung aufbauen, da es nicht über die dafür notwendigen Identifikationsschlüssel verfügt. Deshalb kann das Zentralgerät ZG1 die Auswerteeinheiten 20 der Wagen x, y, z nicht ansprechen, die folglich nicht an der Kommunikation im Funknetz teilnehmen. Befinden sich Wagen a, b, c, die in der Wagenliste sind und deshalb an der Kommunikation im Funknetz teilnehmen, laut der Wagenreihung außerhalb der Funkreichweite des lokalen Netzes, so können die Auswerteeinheiten 20 bzw. Kommunikationsreinrichtungen 22 anderer Wagen der Wagenliste als Relaisstationen verwendet werden.

Figur 3 gibt den sequenziellen Ablauf eines Aufbaus einer gesicherten Funknetz-Verbindung an, wobei eine Challenge-Response-Authentifizierung der Funknetzteilnehmer zum Einsatz kommt.

Jedes Eisenbahn-Verkehrs-Unternehmen (EVU) hat eigene Datenserver EVUS1 und eindeutig zugeordnete Zentralgeräte (ZG1). Erhält ein Eisenbahn-Verkehrs-Unternehmen den Auftrag bestimmte Güterwagen von einem Ort zu einem anderen zu bringen, so wird dies anhand von Zugnummern und den Zugnummern zugeordneten Wagenlisten WL organisiert, wobei in den Wagenlisten die Wagen des Zuges und ihre Reihenfolge enthalten ist. Nachdem die Züge zusammengestellt worden sind, erfolgt die vorgeschriebene Bremsprobe gemäß der Erfindung. Um ein Eingreifen von nicht authorisierten Personen in den sicherheitsrelevanten Bremsprüfprozess zu verhindern, führt ein Schlüsselserver SS mit dem Zentralgerät ZG1 eine sogenannten Challenge-Response-Authentifizierung der Wagen a, b, c und des Zentralgeräts ZG1 selbständig durch.
Das Zentralgerät ZG1 sendet dabei die Zugnummer des ihm zugeordneten Zugs an den Daten-Server EVUS1 des Eisenbahn-Verkehrs-Unternehmens und dieser gibt die Wagenliste WL a, b, c mit den Wagennummern des Zugs und ihrer Reihenfolge im Zugverband zurück. Diese Wagenliste WL a, b, c wird vom Zentralgerät ZG1 an den Schlüsselserver SS übergeben, welcher mit einer Challenge-Information antwortet. Mit dieser Challenge-Information ruft nun das Zentralgerät ZG1 die Auswerteeinheiten 20 der Wagen a, b, c aus der Wagenliste WL a, b, c über das lokale Funknetz an. Die vom Zentralgerät ZG1 angesprochenen Wagen a, b, c, d.h. ihre Auswerteeinheiten 20, antworten mit einer Response-Nachricht, welche die signierte Challenge (Response) enthält. Diese Responses der Wagen werden vom Zentralgerät ZG1 signiert und an den Schlüsselserver SS zur Überprüfung übermittelt. Der Schlüsselserver SS kontrolliert die empfangenen Informationen auf ihre Gültigkeit und sendet ein Schlüsselpaket, welches die Funkschlüssel der korrekt authentifizierten Wagen enthält, wodurch die weitere sicher verschlüsselte Kommunikation im lokalen Funknetz zwischen dem Zentralgerät ZG1 und den Auswerteeinheiten der Wagen a, b, c abgewickelt werden kann.

Um auch in Gebieten ohne Verbindung zum Schlüsselserver SS eine sichere Kommunikation zwischen dem Zentralgerät ZG1 und den Auswerteeinheiten 20 mit dem lokalen Funknetz bieten zu können, können die Wagenliste WL a, b, c und das dazugehörige Schlüsselpaket auch vorab auf das Zentralgerät ZG1 heruntergeladen werden. In diesem Falle wird zwar die Challenge-Response-Authentifizierung nicht erfüllt, aber dennoch eine ausreichend sichere Kommunikation im lokalen Funknetz erreicht.

Die eigentliche Bremsprobe kann entsprechend den Vorgaben des jeweiligen Eisenbahn-Verkehrs-Unternehmen bzw. entsprechend nationalen gesetzlichen Vorgaben durchgeführt werden.

## Patentansprüche

1. Verfahren zur Durchführung einer automatischen Bremsprobe an einem Zug, der eine Anzahl an mit pneumatisch-mechanischen Bremsen ausgerüsteten Wagen (a, b, c) umfasst, wobei die pneumatisch-mechanischen Bremsen ein von einer Hauptluftleitung (HL) gesteuertes Bremssteuerventil (1) und einen pneumatisch betriebenen Bremszylinder (8), dessen Bremszylinderdruck (10) vom Bremssteuerventil (1) gesteuert wird, aufweisen, wobei der Bremszylinder den Bremszylinderdruck (10) über mechanische Komponenten der Bremse, wie z.B. ein Bremsgestänge (3), auf einen Bremsbelag, insbesondere einen Bremsklotz (2) oder Bremsbacken überträgt und dadurch die Bremskraft der Bremse erzeugt, wobei jeder Wagen mit einer Auswerteeinheit (20) ausgerüstet ist, wobei an jedem Wagen der Bremszylinderdruck (10) messtechnisch erfasst, von der Auswerteeinheit (20) ausgewertet und an ein Zentralgerät (ZG1) übertragen wird, **dadurch gekennzeichnet, dass** an jedem Wagen die durch den Bremszylinderdruck (10) bewirkte Bremskraft messtechnisch erfasst, von der Auswerteeinheit (20) ausgewertet und an das Zentralgerät (ZG1) übertragen wird und dass die Auswerteeinheiten (20) und das Zentralgerät (ZG1) über ein lokales Funknetz über an den Wagen angeordneten Kommunikationseinrichtungen (22) miteinander kommunizieren, wobei die Kommunikation zwischen dem Zentralgerät (ZG1) und den Auswerteeinheiten (20) auf die Auswerteeinheiten (20) jener Wagen (a, b, c) beschränkt wird, die in einer den Zug definierenden Wagenliste (WL a, b, c) enthalten sind.

2. Verfahren nach Anspruch 1, **dadurch gekennzeichnet, dass** die Kommunikation zwischen den Auswerteeinheiten (20) und dem Zentralgerät (ZG1) verschlüsselt erfolgt.

3. Verfahren nach Anspruch 2, **dadurch gekennzeichnet, dass** zur Authentifizierung der Auswerteeinheiten (20) am Zentralgerät (ZG1) ein Challenge-Response-Verfahren angewendet wird.

4. Verfahren nach Anspruch 3, **dadurch gekennzeichnet, dass** das Challenge-Response-Verfahren die folgenden Schritte umfasst:
- ein Schlüsselserver (SS) sendet eine Challenge-Information an das Zentralgerät (ZG1)
- das Zentralgerät (ZG1) sendet die Challenge-Information an die Auswerteeinheiten (20) der Wagen (a, b, c) aus der Wagenliste (WL a, b, c) über das lokale Funknetz;
- die vom Zentralgerät (ZG1) angesprochenen Auswerteeinheiten (20) antworten mit einer Response-Nachricht, welche die signierte Challenge (Response) zur eindeutigen Identifizierung enthält;
- das Zentralgerät (ZG1) übermittelt die Response-Informationen der Auswerteeinheiten (20) zusammen mit einer Signatur des Zentralgeräts (ZG1) an einen entfernten Schlüsselserver (SS) zur Überprüfung;
- der Schlüsselserver (SS) kontrolliert die empfangenen Informationen auf ihre Gültigkeit und sendet ein Schlüsselpaket an das Zentralgerät (ZG1) zurück, welches die Funkschlüssel der korrekt authentifizierten Wagen enthält; und
- die weitere Kommunikation zwischen dem Zentralgerät (ZG1) und den Auswerteeinheiten (20) findet unter Verwendung der in dem Schlüsselpaket erhaltenen Funkschlüssel statt.

5. Verfahren nach Anspruch 4, **dadurch gekennzeichnet, dass** das Zentralgerät (ZG1) zur Einleitung der Challenge-Response-Authorisierung die Zugnummer des ihm zugeordneten Zugs an einen Daten-Server (EVUS1) sendet und dieser dem Zentralgerät (ZG1) die Wagenliste (WL a, b, c) mit den Wagen des Zugs und ihrer Reihenfolge im Zugverband zurücksendet, worauf das Zentralgerät (ZG1) diese Wagenliste (WL a, b, c) an den Schlüsselserver (SS) sendet, der dem Zentralgerät (ZG1) mit der Übermittlung der Challenge-Information antwortet.

6. Verfahren nach Anspruch 2, **dadurch gekennzeichnet, dass** das Zentralgerät (ZG1) für eine sichere Kommunikation mit den Auswerteeinheiten (20) in dem lokalen Funknetz von einem Datenserver (EVU1) oder/und einem Schlüsselserver (SS) eine Wagenliste (WL a, b, c) des Zugs und ein dazugehöriges Schlüsselpaket mit Funkschlüsseln für die in der Wagenliste (WL a, b, c) enthaltenen Wagen (a, b, c) herunterlädt, und wobei die Kommunikation zwischen dem Zentralgerät (ZG1) und den Auswerteeinheiten (20) unter Verwendung der Funkschlüssel aus dem Schlüsselpaket und den wagenspezifischen Schlüsseln stattfindet.

7. Verfahren nach einem der vorhergehenden Ansprüche, **dadurch gekennzeichnet, dass** die an den Wagen (a, b, c) des Zugs angeordneten Auswerteeinheiten (20) als Relaisstationen im lokalen Funknetz über die Kommunikationseinrichtungen (22) des Zugs verwendet werden.

8. Verfahren nach einem der vorhergehenden Ansprüche, **dadurch gekennzeichnet, dass** die Kommunikation zwischen dem in der Lokomotive des Zugs angeordneten Zentralgerät (ZG1) und den Auswerteeinheiten (20) der Wagen (a, b, c) des Zugs während der Fahrt des Zugs aktiv bleibt und Störungen im Bremssystem erkannt und gemeldet werden.

9. Verfahren nach einem der vorhergehenden Ansprüche, **dadurch gekennzeichnet, dass** die Auswerteeinheiten (20) die Stellung eines Ein-Aus-Umstellers 5 der Bremse und/oder die Stellung eines Güterzug/Personenzug-Umstellers 6 der Bremse und/oder die Stellung eines Umstellers für leer/beladen 7 erfassen.

10. Verfahren nach einem der vorhergehenden Ansprüche, **dadurch gekennzeichnet, dass** die Auswerteeinheiten (20) den Druck in der Hauptluftleitung HL erfassen.

11. Wagen (a, b, c, x, y, z) für den Schienenverkehr mit einer pneumatisch-mechanischen Bremse, die ein von einer Hauptluftleitung (HL) gesteuertes Bremssteuerventil (1), einen pneumatisch betriebenen Bremszylinder (8), dessen Bremszylinderdruck (10) vom Bremssteuerventil (1) gesteuert wird, und mechanische Komponenten, wie z.B. ein Bremsgestänge (3) und einen Bremsgestängesteller (9), umfasst, wobei der Bremszylinder (8) den Bremszylinderdruck (10) über die mechanischen Komponenten der Bremse auf einen Bremsbelag, insbesondere einen Bremsklotz (2) oder Bremsbacken überträgt und dadurch die Bremskraft der Bremse erzeugt, wobei jeder Wagen mit einer Auswerteeinheit (20) mit einer drahtlosen Kommunikationseinrichtung (22) ausgerüstet ist, **dadurch gekennzeichnet, dass** der Wagen einen Sensor (p_C) zur Erfassung des Bremszylinderdrucks (10) und einen Sensor (F) zur Erfassung einer durch den Bremszylinderdruck (10) in der Bremsmechanik bewirkten Kraft, die in einer Bremskraft resultiert, aufweist, wobei die Sensoren (p_C, F) mit der Auswerteeinheit (20) verbunden sind und die Auswerteeinheit (20) Rechenmittel und Speichermittel aufweist und dazu ausgebildet ist, das Verfahren zur Durchführung einer automatischen Bremsprobe an einem Zug gemäß einem der vorhergehenden Ansprüche auszuführen.

12. Wagen nach Anspruch 11, **dadurch gekennzeichnet, dass** die drahtlose Kommunikationseinrichtung (22) der Auswerteeinheit (20) als Relaisstation für drahtlose Kommunikationseinrichtungen (22) von weiteren Auswerteeinheiten (20) in einem lokalen Funknetz eines Wagenverbands ausgebildet ist.

13. Wagen nach Anspruch 11 oder 12, **dadurch gekennzeichnet, dass** ein Sensor (E/A) für die Erfassung der Stellung eines Ein-Aus-Umstellers 5 der Bremse und/oder ein Sensor (G/P) für die Erfassung der Stellung eines Güterzug/Personenzug-Umstellers (6) der Bremse und/oder ein Sensor (l/b) zur Erfassung der Stellung eines Umstellers für leer/beladen (7) der Bremse vorgesehen ist/sind, wobei der/die Sensor(en) (5, 6, 7) mit der Auswerteeinheit (20) verbunden sind, wobei die Sensoren vorzugsweise als Positions- oder Endlagenschalter ausgebildet sind.

14. Wagen nach einem der Ansprüche 11 bis 13, **gekennzeichnet durch** einen mit der Auswerteeinheit (20) verbundenen Sensor (p_HL) zur Erfassung des Drucks in der Hauptluftleitung (HL).

15. Wagen nach einem der Ansprüche 11 bis 14, **dadurch gekennzeichnet, dass** die Auswerteeinheit (20) mit einer GPS-Einheit (23) versehen ist, die eine gleisgenaue Ortung des Wagens und Erkennung der Wagenreihenfolge anhand der GPS-Position bietet.

## Claims

1. A method for carrying out an automatic brake test on a train, which comprises a number of carriages (a, b, c) provided with pneumatic-mechanical brakes, wherein the pneumatic-mechanical brakes have a brake control valve (1) controlled by a main air pipe (HL) and a pneumatically operated brake cylinder (8), the brake cylinder pressure (10) of which being controlled by the brake control valve (1), wherein the brake cylinder transfers the brake cylinder pressure (10) via mechanical components of the brake such as, e.g., a brake leverage (3), onto a brake pad, in particular a brake block (2) or brake shoes, and in this way generates the brake power of the brake, wherein each carriage is equipped with an evaluation unit (20), wherein the brake cylinder pressure (10) is measured at each carriage, evaluated by the evaluation unit (20) and transferred to a central device (ZG1), **characterized in that** at each carriage the brake power caused by the brake cylinder pressure (10) is measured, evaluated by the evaluation unit (20) and transferred to the central device (ZG1) and that the evaluation units (20) and the central device (ZG1) communicate with one another via a local radio network through communication devices (22) arranged at the carriage, wherein the communication between the central device (ZG1) and the evaluation units (20) is limited to the evaluation units (20) of those carriages (a, b, c), which are contained in a carriage list (WL a, b, c) defining the train.

2. A method according to claim 1, **characterized in that** the communication between the evaluation units (20) and the central device (ZG1) is carried out in an encrypted way.

3. A method according to claim 2, **characterized in that** there is applied a challenge response method for authenticating the evaluation units (20) at the central device (ZG1).

4. A method according to claim 3, **characterized in that** the challenge response method comprises the following steps:
- a key server (SS) sends a challenge information to the central device (ZG1)
- the central device (ZG1) sends the challenge information to the evaluation units (20) of the carriages (a, b, c) from the carriage list (WL a, b, c) via the local radio network;
- the evaluation units (20) addressed by the central device (ZG1) respond using a response message, which contains the signed challenge (response) for the unique identification;
- the central device (ZG1) transfers the response information of the evaluation units (20) together with a signature of the central device (ZG1) to a remote key server (SS) for checking;
- the key server (SS) checks the received information on the validity thereof and sends a key packet back to the central device (ZG1), which contains the radio keys of the correctly authenticated carriages; and
- the further communication between the central device (ZG1) and the evaluation units (20) is realized using the radio keys received in the key packet.

5. A method according to claim 4, **characterized in that** the central device (ZG1) sends the train number of the train, which is allocated thereto, to a data server (EVUS 1) to initiate the challenge response authorization and this sends back to the central device (ZG1) the carriage list (WL a, b, c) with the carriages of the train and their order within the train set, whereupon the central device (ZG1) sends this carriage list (WL a, b, c) to the key server (SS), which responds to the central device (ZG1) by transferring the challenge information.

6. A method according to claim 2, **characterized in that** the central device (ZG1) downloads for a safe communication with the evaluation units (20) within the local radio network from a data server (EVU1) and/or a key server (SS) a carriage list (WL a, b, c) of the train and a related key packet having radio keys for the carriages (a, b, c) contained in the carriage list (WL a, b, c), and wherein the communication between the central device (ZG1) and the evaluation units (20) is realized using the radio keys from the key packet and carriage-specific keys.

7. A method according to any of the preceding claims, **characterized in that** the evaluation units (20) arranged at the carriages (a, b, c) of the train are used as relay stations within the local radio network via the communication devices (22) of the train.

8. A method according to any of the preceding claims, **characterized in that** the communication between the central device (ZG1) arranged in the locomotive of the train and the evaluation units (20) of the carriages (a, b, c) of the train remains active during the travel of the train and that malfunctions in the brake system are detected and notified.

9. A method according to any of the preceding claims, **characterized in that** the evaluation units (20) detect the position of an On-Off converter 5 of the brake and/or the position of a freight train / passenger train converter 6 of the brake and/or the position of a converter for empty/loaded 7.

10. A method according to any of the preceding claims, **characterized in that** the evaluation units (20) detect the pressure in the main air pipe HL.

11. Carriages (a, b, c, x, y, z) for rail-bound transport having a pneumatic-mechanical brake, which comprises a brake control valve (1) controlled by a main air pipe (HL), a pneumatically operated brake cylinder (8), the brake cylinder pressure (10) of which being controlled by the brake control valve (1), and mechanical components such as, e.g., a brake leverage (3) and a brake leverage actuator (9), wherein the brake cylinder (8) transfers the brake cylinder pressure (10) via the mechanical components of the brake onto a brake pad, in particular a brake block (2) or brake shoes, and in this way generates the brake power of the brake, wherein each carriage is equipped with an evaluation unit (20) having a wireless communication device (22), **characterized in that** the carriage has a sensor (p_C) for detecting the brake cylinder pressure (10) and a sensor (F) for detecting a force caused by the brake cylinder pressure (10) in the braking mechanics, resulting in a brake force, wherein the sensors (p_C, F) are connected to the evaluation unit (20) and the evaluation unit (20) has calculation means and storage means and is configured to carry out the method for carrying out an automatic brake test on a train according to any of the preceding claims.

12. A carriage according to claim 11, **characterized in that** the wireless communication device (22) of the evaluation unit (20) is configured as a relay station for wireless communication devices (22) of further evaluation devices (20) within a local radio network of a carriage set.

13. A carriage according to claim 11 or 12, **characterized in that** there is/are provided a sensor (E/A) for detecting the position of an On-Off converter 5 of the brake and/or a sensor (G/P) for detecting the position of a freight train / passenger train converter (6) of the brake and/or a sensor (1/b) for detecting the position of a converter for empty / loaded (7) of the brake, wherein the sensor(s) (5, 6, 7) are connected to the evaluation unit (20), wherein the sensors are preferably configured as position or final location switches.

14. A carriage according to any of the claims 11 to 13, **characterized by** a sensor (p_HL) connected to the evaluation unit (20) for detecting the pressure within the main air pipe (HL).

15. A carriage according to any of the claims 11 to 14, **characterized in that** the evaluation unit (20) is provided with a GPS unit (23), which offers a rail track-precise localization of the carriage and detection of the carriage order by way of the GPS position.

## Revendications

1. Procédé de mise en œuvre d'une vérification automatique des freins sur un train, ledit train comportant un certain nombre de wagons (a, b, c) équipés de freins pneumatiques-mécaniques, les freins pneumatiques-mécaniques présentant une soupape de commande de frein (1) commandée par une conduite d'air principale (HL) et un cylindre de frein (8) à fonctionnement pneumatique dont la pression (10) est commandée par la soupape de commande de frein (1), le cylindre de frein transférant la pression (10) du cylindre de frein, par l'intermédiaire de composants mécaniques du frein, tels que par exemple une timonerie de frein (3), sur une garniture de frein, en particulier un sabot de frein (2) ou des mâchoires de frein, et générant de ce fait la force de freinage du frein, chaque wagon étant équipé d'une unité d'évaluation (20), la pression (10) du cylindre de frein étant détectée sur chaque wagon en utilisant des techniques de mesure, évaluée par l'unité d'évaluation (20) et transmise à un appareil central (ZG1), **caractérisé en ce que** la force de freinage provoquée par la pression (10) du cylindre de frein est détectée sur chaque wagon en utilisant des techniques de mesure, évaluée par l'unité d'évaluation (20) et transmise à l'appareil central (ZG1), et **en ce que** les unités d'évaluation (20) et l'appareil central (ZG1) communiquent entre eux par l'intermédiaire d'un réseau de radiocommunication local par l'entremise de dispositifs de communication (22) qui sont disposés sur les wagons, la communication entre l'appareil central (ZG1) et les unités d'évaluation (20) étant limitée aux unités d'évaluation (20) des wagons (a, b, c), qui figurent sur une liste de wagons (WL a, b, c) qui définit le train.

2. Procédé selon la revendication 1, **caractérisé en ce que** la communication entre les unités d'évaluation (20) et l'appareil central (ZG1) est codée.

3. Procédé selon la revendication 2, **caractérisé en ce que**, pour authentifier les unités d'évaluation (20) sur l'appareil central (ZG1), on utilise un procédé de défi-réponse.

4. Procédé selon la revendication 3, **caractérisé en ce que** le procédé de défi-réponse comprend les étapes suivantes :
- un serveur de clés (SS) envoie une information de défi à l'unité centrale (ZG1) ;
- l'appareil central (ZG1) envoie l'information de défi aux unités d'évaluation (20) des wagons (a, b, c) figurant sur la liste des wagons (WL a, b, c) par l'intermédiaire du réseau de radiocommunication local ;
- les unités d'évaluation (20) sollicitées par l'appareil central (ZG1) répondent par un message de réponse, lequel contient le défi (réponse) signé pour une identification sans ambiguïté ;
- l'appareil central (ZG1) transmet les informations de réponse des unités d'évaluation (20) ainsi qu'une signature de l'appareil central (ZG1) à un serveur de clés distant (SS) à des fins de vérification ;
- le serveur de clés (SS) contrôle la validité des informations reçues et renvoie un paquet de clés à l'appareil central (ZG1), lequel contient les clés radio des wagons correctement authentifiés ; et
- la communication ultérieure entre l'appareil central (ZG1) et les unités d'évaluation (20) a lieu en utilisant des clés radio reçues dans le paquet de clés.

5. Procédé selon la revendication 4, **caractérisé en ce que**, pour initier l'autorisation de défi-réponse, l'appareil central (ZG1) envoie le numéro de train du train qui lui est affecté à un serveur de données (EVUS 1) et ce dernier renvoie la liste de wagons (WL a, b, c) à l'appareil central (ZG1) avec les wagons du train et leur ordre dans le convoi ferroviaire, après quoi l'appareil central (ZG1) envoie cette liste de wagons (WL a, b, c) au serveur de clés (SS) qui répond à l'appareil central (ZG1) en transmettant l'information de défi.

6. Procédé selon la revendication 2, **caractérisé en ce que**, pour une communication sûre avec les unités d'évaluation (20) dans le réseau de radiocommunication local d'un serveur de données (EVU1) et/ou d'un serveur de clés (SS), l'appareil central (ZG1) télécharge une liste de wagons (WL a, b, c) du train et un paquet de clés associé comprenant des clés radio pour les wagons (a, b, c) figurant sur la liste de wagons (WL a, b, c), et la communication entre l'appareil central (ZG1) et les unités d'évaluation (20) a lieu en utilisant les clés radio du paquet de clés ainsi que les clés spécifiques au wagon.

7. Procédé selon l'une quelconque des revendications précédentes, **caractérisé en ce que** les unités d'évaluation (20) qui sont disposées sur les wagons (a, b, c) du train sont utilisées en tant que stations relais dans le réseau de radiocommunication local par l'intermédiaire des dispositifs de communication (22) du train.

8. Procédé selon l'une quelconque des revendications précédentes, **caractérisé en ce que** la communication entre l'appareil central (ZG1) qui est disposé dans la locomotive du train et les unités d'évaluation (20) des wagons (a, b, c) du train reste active pendant la marche du train et les perturbations dans le système de freinage sont détectées et signalées.

9. Procédé selon l'une quelconque des revendications précédentes, **caractérisé en ce que** les unités d'évaluation (20) détectent la position d'un élément de commutation marche-arrêt (5) du frein et/ou la position d'un élément de commutation train de marchandises/train de voyageurs (6) du frein et/ou la position d'un élément de commutation à vide/chargé (7).

10. Procédé selon l'une quelconque des revendications précédentes, **caractérisé en ce que** les unités d'évaluation (20) détectent la pression qui règne à l'intérieur de la conduite d'air principale HL.

11. Wagon (a, b, c, x, y, z) pour le trafic ferroviaire, équipé d'un frein pneumatique-mécanique comportant une soupape de commande de frein (1) commandée par une conduite d'air principale (HL), un cylindre de frein (8) à fonctionnement pneumatique dont la pression (10) est commandée par la soupape de commande de frein (1), et des composants mécaniques tels qu'une timonerie de frein (3) et un dispositif de réglage (9) de timonerie de frein, le cylindre de frein (8) transférant la pression (10) du cylindre de frein par l'intermédiaire des composants mécaniques du frein sur une garniture de frein, en particulier un sabot de frein (2) ou des mâchoires de frein, et générant de ce fait la force de freinage du frein, chaque wagon étant équipé d'une unité d'évaluation (20) dotée d'un dispositif de communication sans fil (22), **caractérisé en ce que** le wagon présente un capteur (p_C) pour détecter la pression (10) du cylindre de frein et un capteur (F) pour détecter une force provoquée par la pression (10) du cylindre de frein dans le mécanisme de freinage, qui résulte en une force de freinage, les capteurs (p_C, F) étant reliés à l'unité d'évaluation (20) et l'unité d'évaluation (20) présentant des moyens de calcul et des moyens de stockage et étant conçue de manière à appliquer le procédé de mise en œuvre d'une vérification automatique des freins sur un train selon l'une quelconque des revendications précédentes.

12. Wagon selon la revendication 11, **caractérisé en ce que** le dispositif de communication sans fil (22) de l'unité d'évaluation (20) se présente sous la forme d'une station relais pour les dispositifs de communication sans fil (22) d'autres unités d'évaluation (20) dans un réseau de radiocommunication local d'un convoi de wagons.

13. Wagon selon la revendication 11 ou 12, **caractérisé en ce qu'**un capteur (E/A) pour détecter la position d'un élément de commutation marche-arrêt (5) du frein et/ou un capteur (G/P) pour détecter la position d'un élément de commutation train de marchandises/train de voyageurs (6) du frein et/ou un capteur (1/b) pour détecter la position d'un élément de commutation à vide/chargé (7) du frein est/sont prévu(s), le/les capteur(s) (5, 6, 7) étant relié(s) à l'unité d'évaluation (20), les capteurs étant de préférence réalisés sous la forme d'un commutateur de position ou de fin de course.

14. Wagon selon l'une quelconque des revendications 11 à 13, **caractérisé en ce qu'**un capteur (p_HL) est relié à l'unité d'évaluation (20) dans le but de détecter la pression qui règne à l'intérieur de la conduite d'air principale (HL).

15. Wagon selon l'une quelconque des revendications 11 à 14, **caractérisé en ce que** l'unité d'évaluation (20) est dotée d'une unité GPS (23) qui permet de localiser avec précision le wagon en fonction de la voie et de l'ordre des wagons sur la base de la position du GPS.
